# EUROPEAN PATENT SPECIFICATION

(11) **EP 2 239 883 B1**
(45) Date of publication and mention of the grant of the patent: **20.02.2013**
(21) Application number: 08872189.9
(22) Date of filing: 29.10.2008
(51) Int. Cl.: H04L 29/06, H04L 29/08

(54) **Method, device, system, client node, peer node and convergent point for preventing node from forging identity**
Verfahren, Vorrichtung, System, Client-Knoten, Peer-Knoten und konvergierender Punkt zur Verhinderung der Identitätsfälschung durch einen Knoten
Procédé, dispositif, sytème, noeud client, noeud pair et point de convergence pour empêcher un noeud d'usurper une identité

(30) Priority: 02.02.2008 CN 200810006832
(43) Date of publication of application: 13.10.2010
(60) Divisional application: 12195638.7
(73) Proprietor: Huawei Technologies Co., Ltd., Longgang District, Shenzhen Guangdong 518129 (CN)
(72) Inventor: LI, Feng, Guangdong 518129 (CN); JIANG, Xingfeng, Guangdong 518129 (CN); JIANG, Haifeng, Guangdong 518129 (CN)
(74) Representative: Isarpatent
(86) International application number: PCT/CN2008/072875
(87) International publication number: WO 2009/097721

(56) References cited:
- WO-A2-2007/012083
- WO-A2-2007/089717
- CN-A- 101 009 567
- CN-A- 101 106 503
- US-A1- 2007 097 986
- US-A1- 2007 097 986
- HAUSWIRTH M ET AL: "Handling identity in peer-to-peer systems", DATABASE AND EXPERT SYSTEMS APPLICATIONS, 2003. PROCEEDINGS. 14TH INTE RNATIONAL WORKSHOP ON 1-5 SEPT 2003, PISCATAWAY, NJ, USA,IEEE, 1 September 2003 (2003-09-01), pages 942-946, XP010658293, ISBN: 978-0-7695-1993-7
- DINGER J ET AL: "Defending the Sybil Attack in P2P Networks: Taxonomy, Challenges, and a Proposal for Self-Registration", AVAILABILITY, RELIABILITY AND SECURITY, 2006. ARES 2006. THE FIRST INT ERNATIONAL CONFERENCE ON VIENNA, AUSTRIA 20-22 APRIL 2006, PISCATAWAY, NJ, USA,IEEE, 20 April 2006 (2006-04-20), pages 756-763, XP010913271, DOI: DOI:10.1109/ARES.2006.45 ISBN: 978-0-7695-2567-9

## Description

### FIELD OF THE TECHNOLOGY

The present invention relates to the field of overlay network, and more particularly to a method, a device, a system, a client node, a peer node, and a convergent point for preventing a network equipment from forging identity (ID).

### BACKGROUND OF THE INVENTION

An overlay network is a virtual network built on one or more existing underlying networks (for example, a physical network or a logical network). The overlay network can implement certain functions that are difficult for the underlying network, such as message routing or topology maintenance.

The Peer to Peer (P2P) overlay network (that is, P2P network) is an overlay network built in a P2P mode based on the existing Internet. In the P2P network, the functions such as equal status and resource sharing among the peer nodes (peers) in the P2P network can be implemented based on the existing Internet (such as client node/server network).

The P2P network has two types of entities: peer node and client node. In addition to having the function of resource sharing, the peer node participates in the organization and maintenance of the P2P network, including routing, storage, and other functions. The functions of the client node are relatively simple. It needs to forward a request to the network via the peer node, and has no routing function, that is, a routing in the network does not pass the client node.

In a P2P network, each peer node and client node has an ID. In routing, keys/value pairs and values corresponding to the keys in the network are stored or read according to the peer node ID (peer ID). The client node receives services provided by the peer node according to the client node ID. The peer node ID and the client node ID are obtained according to certain rules, for example, the former is obtained through Hash algorithm, and the latter is allocated by a management server.

A malicious node can easily forge the peer node ID and the client node ID. The malicious node attacks the network or illegally obtains network resources by forging the peer node ID, and avoids the cost for using network resources by forging other client node IDs.

To prevent ID forging, a commonly used method is as follows. Before each client node joins the network, the client node ID is authenticated by a third-party institution or organization, and the client node passing the authentication can obtain a certificate to join the network. The client node signs the self-generated message according to the private key of the certificate, and authenticates and signs the received message.

During the implementation of the present invention, the inventors found that the above technical solution has the following problems. As the certificate and the client node are bound in the above method, the costs are relatively high in spite of the capability of preventing ID forging. Firstly, in the method, a Public Key Infrastructure (PKI) system needs to be deployed in the network, but the costs of the deployment are high, and moreover, the system maintenance costs are high. Secondly, the client node needs to sign each sent message and each received message, which results in a relatively long delay in network message routing. As a result, the method cannot necessarily satisfy a streaming media service with high requirements on delay. Thirdly, in certain simple application environments, even though both the client node and the peer node have certificates, the certificates are not necessarily used to authenticate messages, and only ID authentication is needed.

HAUSWIRTH M ET AL: "Handling identity in peer-to-peer systems", discloses that due to the limited number of available IP addresses most computers on the Internet use dynamic IP addresses which causes problems for applications that have to maintain routing tables, for example, peer-to-peer systems. To overcome this we propose unique peer identifiers in the routing tables and apply the peer-to-peer system itself to maintain consistent id-to-IP mappings to be used in the routing process.

DINGER J ET AL: "Defending the Sybil Attack in P2P Networks: Taxonomy, Challenges, and a Proposal Self-Registration", discloses that the robustness of Peer-to-Peer (P2P) networks, in particular of DHT-based overlay networks, suffers significantly when a Sybil attack is performed. We tackle the issue of Sybil attacks from two sides. First, we clarify, analyze, and classify the P2P identifier assignment process. By clearly separating network participants from network nodes, two challenges of P2P networks under a Sybil attack become obvious: 1) stability over time, and 2) identity differentiation. Second, as a starting point for a quantitative analysis of time-stability of P2P networks under Sybil attacks and under some assumptions with respect to identity differentiation, we propose an identity registration procedure called self-registration that makes use of the inherent distribution mechanisms of a P2P network.

US 2007/097986 A1 discloses that a peer communication terminal programmed to operate in a peer-to-peer network. The terminals includes a transceiver, a controller coupled to the transceiver and to a memory device, and a mappling table stored in memory, wherein the mapping table associates a terminal identity to corresponding transport information for at least one other peer terminal.

WO 2007/012083 A2 discloses that in a network user authentication system, a network user is identified for authentication purposes using the unique identifier for a dedicated physical communication line associated with the building in which the network user is located or a digital certificate which is associated with a secure component or communication line physically attached to a building. An authentication server initially verifies the identification to be associated with the dedicated communication line for authentication purpose. The digital certificate may be stored in a building gateway or in an edge site module which is connected to the secure components of a plurality of buildings and stores unique digital certificates for each building.

### SUMMARY OF THE INVENTION

An embodiment of the present invention provides a method for preventing a node from forging ID in a P2P network, which addresses the problem that costs are high in deployment and maintenance when a PKI is deployed in the existing technical solution for preventing peer node cheating, and addresses the problem that message routing delay is long when signature verification is performed for each sent message and each received message in the existing technical solution for preventing peer node cheating.

To achieve the objectives, the method for preventing a node from forging ID according to the embodiment of the present invention includes the following steps.

After a client node finds a peer node serving the client node, at least one of the client node and the peer node acts as an authentication initiator and authenticates the other party.

After the authentication succeeds, the client node or the peer node acting as the authentication initiator locally establishes and stores an ID anti-forgery log about the other party, and identifies a malicious node by using the ID anti-forgery log,
wherein the node acting as an authentication initiator is the client node or the peer node,
if the node acting as an authentication initiator is the client node, the ID anti-forgery log about the other party comprises the ID of the peer node, a physical address of the peer node, and one ore more mapping relation(s) between the ID of the peer node and the physical address of the peer node;
if the node acting as an authentication initiator is the peer node, the ID anti-forgery log about the other party comprises the ID of the client node, a physical address of the client node, and one or more mapping relation(s) between the ID of the client node and the physical address of the client node.

In the method for preventing a node from forging ID according to the embodiment of the present invention, the peer node or the client node locally stores an ID anti-forgery log, which solves the problem that the costs are high in deployment and maintenance when a PKI is deployed in the existing technical solution for preventing peer node cheating. The process of malicious node identification by using the ID anti-forgery log is simple, effective, and the detection costs are low. The problem that message routing delay is long when signature verification is performed for each sent and received message in the existing technical solution for preventing peer node cheating is solved. When the malicious node is identified by using the ID anti-forgery log, only the node ID needs to be verified, while signature verification is not necessarily performed for each sent and received message, and thus the routing delay is shortened.

In an embodiment, the present invention further provides a device for preventing a node from forging ID in a P2P network, which addresses the problem that costs are high in deployment and maintenance when a PKI is deployed in the existing technical solution for preventing peer node cheating, and addresses the problem that message routing delay is long when signature verification is performed for each sent and received message in the existing technical solution for preventing peer node cheating.

To achieve the objectives, the device for preventing a node from forging ID according to the embodiment of the present invention adopts the following technical solution. The device includes an authentication unit 1, a storage unit 2, and an identification unit 3.

The authentication unit 1 is configured to authenticate validity of an ID of a node.

The storage unit 2 is configured to establish and store an ID anti-forgery log about the authenticated node ID.

The identification unit 3 is configured to identify a malicious node according to the ID anti-forgery log,
wherein the device is a client node or a peer node or a network convergent point,
if the device is the client node, the ID anti-forgery log about the authenticated node comprises the ID of the peer node, a physical address of the peer node, and one or more mapping relation(s) between the ID of the peer node and the physical address of the peer node; and
if the device is the peer node, the ID anti-forgery log about the authenticated node comprises the ID of the client node, a physical address of the client node and one or more mapping relation(s) between the ID of the client node and the physical address of the client node; and
if the device is the network convergent point, the ID anti-forgery log about the authenticated node comprises the ID of the peer node, a physical address of the peer node, and one or more mapping relation(s) between the ID of the peer node and the physical address of the peer node.

In the device for preventing a node from forging ID provided in the embodiment of the present invention, the peer node or the client node stores an ID anti-forgery log in the local storage unit, which solves the problem that costs are high in deployment and maintenance when a PKI is deployed in the existing technical solution for preventing peer node cheating. The process for the identification unit to identify the malicious node by using the ID anti-forgery log is simple, effective, and the detection costs are low. The problem that message routing delay is long when signature verification is performed for each sent and received message in the existing technical solution for preventing peer node cheating is solved. When the identification unit identifies a malicious node by using the ID anti-forgery log, the authentication unit simply verifies the node ID, while signature verification is not necessarily performed for each sent and received message, and thus the routing delay is shortened.

In an embodiment, the present invention further provides a system for preventing a node from forging ID in a P2P network, which addresses the problem that costs are high in deployment and maintenance when a PKI is deployed in the existing technical solution for preventing peer node cheating, and addresses the problem that message routing delay is long when signature verification for each sent and received message in the existing technical solution for preventing peer node cheating.

To achieve the objectives, the system for preventing a node from forging ID according to the embodiment of the present invention adopts the following technical solution. The system includes a peer node and a client node.

The client node is configured to find the peer node serving the client node and establish a connection with the peer node.

The peer node is configured to establish the connection with the client node sending a service request to the peer node.

At least one of the client node and the peer node acts as an authentication initiator and authenticates the other party.

After the authentication succeeds, the client node or the peer node acting as the authentication initiator locally establishes and stores an ID anti-forgery log about the other party and identifies the malicious node by using the ID anti-forgery, by wherein
if the node acting as an authentication initiator is the client node, the ID anti-forgery log about the other party comprises an ID of the peer node, a physical address of the peer node and one or more mapping relation(s) between the ID of the peer node and the physical address of the peer node; and
if the node acting as an authentication initiator is the peer node, the ID anti-forgery log about the other party comprises an ID of the client, a physical address of the client node, and one or more mapping relation(s) between the ID of the client node and the physical address of the client node.

In the system for preventing a node from forging ID provided in the embodiment of the present invention, the peer node or the client node stores an ID anti-forgery log at a local storage, which solves the problem that costs are high in deployment and maintenance when a PKI is deployed in the existing technical solution for preventing peer node cheating. The process for the identification units of the peer node and the client node to identify the malicious node by using the ID anti-forgery log is simple, effective, and the detection costs are low.

The problem that message routing delay is long when signature verification is performed for each sent and received message in the existing technical solution for preventing peer node cheating is solved. When the identification units of the peer node and the client node identify the malicious node by using the ID anti-forgery log, the authentication unit simply needs to verify the node ID, while signature verification is not necessarily performed for each sent and received message, and thus the routing delay is shortened.

### BRIEF DESCRIPTION OF THE DRAWINGS

FIG. 1 is a flow chart of a method for preventing a node from forging ID according to an embodiment of the present invention;
FIG. 2 is a schematic view of a method for preventing a node from forging ID by using a convergent point according to an embodiment of the present invention;
FIG. 3 is a schematic structural view of a device for preventing a node from forging ID according to an embodiment of the present invention; and
FIG. 4 is a schematic structural view of a system for preventing a node from forging ID according to an embodiment of the present invention.

### DETAILED DESCRIPTION OF THE EMBODIMENTS

A method for preventing a node from forging ID is provided in an embodiment of the present invention, so as to solve the problems of high overhead and long delay of the existing method for preventing peer node cheating in a P2P network. The method embodiment of the present invention for preventing a node from forging ID will be described in detail below with reference to the accompanying drawings.

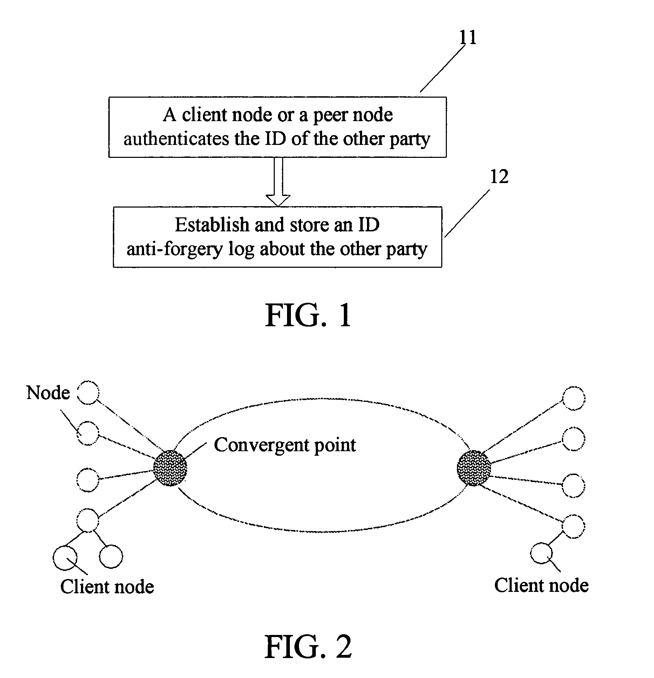

As shown in FIG.1, the method for preventing a node from forging ID provided in an embodiment of the present invention includes the following steps.

In step 11, after a client node finds a peer node serving the client node, at least one of the client node and the peer node acts as an authentication initiator and authenticates the other party The authentication includes one-way authentication and mutual authentication.

The one-way authentication is as follows: The authentication initiator (either the client node or the peer node) authenticates the ID of the other party, that is, the client node authenticates the peer node ID, or the peer node authenticates the client node ID.

The mutual authentication is as follows: The client node authenticates the peer node ID, and the peer node authenticates the client node ID.

The specific authentication process is covered in prior art, and will not be described in detail here.

In step 12, after the authentication succeeds, the client node or the peer node acting as the authentication initiator locally establishes and stores an ID anti-forgery log about the other party.

In the one-way authentication, if the client node is the authentication initiator, the client node locally establishes an ID anti-forgery log about the peer node. The ID anti-forgery log includes the ID of the peer node, a physical address of the peer node, and one or more mapping relation(s) between the ID of the peer node and the physical address of the peer node.

In the one-way authentication, if the peer node is the authentication initiator, the peer node locally establishes an ID anti-forgery log about the client node. The ID anti-forgery log includes the ID of the client node, the physical address of the client node, and one or more mapping relation(s) between the ID of the client node and the physical address of the client node.

In the mutual authentication, the peer node locally establishes an ID anti-forgery log about the client node, and the client node locally establishes an ID anti-forgery log about the peer node.

The ID of the peer node includes peer node identification, and the ID of the client node includes client node identification. The physical address may be a MAC address, or IP address, or Asynchronous Transfer Mode Virtual Path Identifier/Virtual Channel Identifier (ATM VPI/VCI), or Virtual Local Area Network ID (VLAN ID) of the node, or may be a physical connecting address between the client node and the peer node. One peer node may have a mapping relation with at least two physical addresses.

The node establishes and stores an ID anti-forgery log about the other party, and identifies the malicious node by using the ID anti-forgery log. When the client node locally establishes and stores the ID anti-forgery log about the other party, the specific process for the client node to identify the malicious node is as follows.

After receiving the message sent by the peer node, the client node acts as the authentication initiator and authenticates the mapping relation(s) between the ID of the peer node and the physical address of the peer node.

If the mapping relation(s) between the ID of the peer node and the physical address of the peer node is consistent with the record in the ID anti-forgery log owned by the initiator, the peer node is not a malicious node; If the mapping relation(s) between the ID of the peer node and the physical address of the peer node is inconsistent with the record in the ID anti-forgery log owned by the initiator, the peer node is a malicious node.

When the peer node locally establishes and stores the ID anti-forgery log about the other party, the specific process for the peer node to identify the malicious node is as follows.

After receiving the message sent by the client node, the peer node acts as the authentication initiator and authenticates the mapping relation(s) between the ID of the client node and the physical address of the client node.

If the mapping relation(s) between the ID of the client node and the physical address of the client node is consistent with the record in the ID anti-forgery log owned by the initiator, the client node is not a malicious node; If the mapping relation(s) between the IDof the client node and the physical address of the client node is inconsistent with the record in the ID anti-forgery log owned by the initiator, the client node is not a malicious node, the client node is a malicious node.

In the method for preventing a node from forging ID provided in the embodiment of the present invention, the peer node or the client node locally stores an ID anti-forgery log, which solves the problem that costs are high in deployment and maintenance when a PKI is deployed in the existing technical solution for preventing peer node cheating. The process of malicious node identification by using the ID anti-forgery log is simple, effective, and the detection costs are low. The problem that message routing delay is long when signature verification is performed for each sent and received message in the existing technical solution for preventing peer node cheating is solved. When the malicious node is identified by using the ID anti-forgery log, only the node ID needs to be verified, while signature verification is not necessarily performed for each sent and received message, and thus the routing delay is shortened.

If the physical address of the peer node changes, the client node deletes an ID anti-forgery record about the peer node from the ID anti-forgery log.

After the peer node obtains a new physical address, the client node re-authenticates the peer node.

After the authentication succeeds, the client node stores the mapping relation(s) between the ID of the peer node and the new physical address of the peer node in the local ID anti-forgery log.

When the peer node serving the client node leaves the P2P network, the peer node notifies the mapping relation(s) between the ID of the client node and the physical address of the client node to a proxy peer node, and notifies the client node that the proxy peer node continues to serve the client node.

Before accepting the service provided by the proxy peer node, the client node firstly authenticates an ID of the proxy peer node.

After the authentication succeeds, the client node adds the mapping relation(s) between the ID of the proxy peer node and the physical address of the proxy peer node to the local ID anti-forgery log.

Then, the client node accepts the service provided by the proxy peer node.

As shown in FIG.2, in some application scenarios, convergent points that can sense the message in the P2P network are connected in the P2P network. Each peer node is connected to the P2P network via the convergent point, and the peer nodes can also connect with client nodes. The message among the peer nodes is forwarded to the P2P network via a certain convergent point. These convergent points have a basic message parsing function. The convergent points parse the received message through deep packet inspection (DPI) to obtain the message content, extract the mapping relation(s) between the ID of the peer node and the physical address of the peer node from the message, and establish an ID anti-forgery log about the peer node.

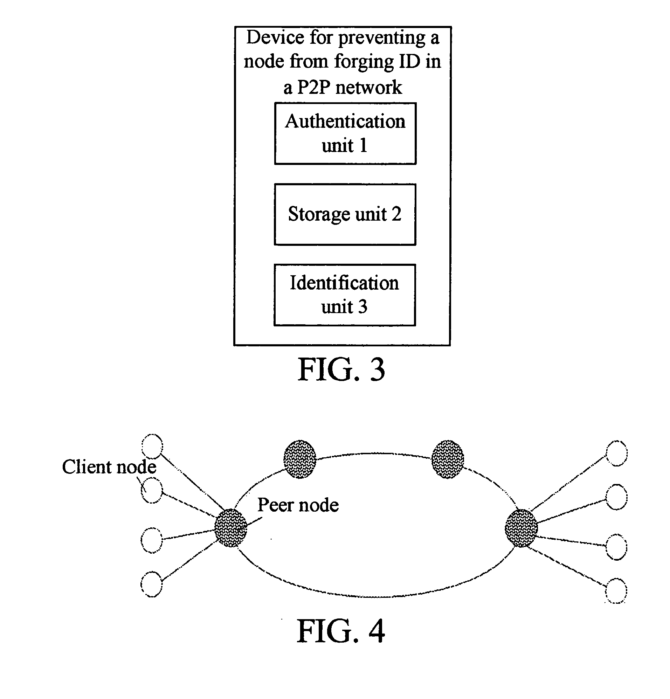

The embodiment of the present invention further provides a device for preventing a node from forging ID in a P2P network. As shown in FIG. 3, the device includes an authentication unit 1, a storage unit 2, and an identification unit 3.

The authentication unit 1 is configured to authenticate validity of an ID of a node.

The storage unit 2 is configured to establish and store an ID anti-forgery log about the authenticated node.

The identification unit 3 is configured to identify a malicious node according to the ID anti-forgery log.

Nodes include a client node and a peer node. If a node is a client node, the ID anti-forgery log of the node includes: The ID of the peer node, the physical address of the peer node, and the mapping relation(s) between the ID of the peer node and the physical address. The peer node ID includes peer node identification. If a node is a peer node, the ID anti-forgery log of the node includes the ID of the client node, the physical address of the client node, and the mapping relation(s) between the ID of the client node and the physical address of the client node.

The process of malicious node identification according to the ID anti-forgery log has been described in detail in the method embodiment, and will not be described again here.

In the device for preventing a node from forging ID provided in the embodiment of the present invention, the node stores an ID anti-forgery log in a local storage unit, which solves the problem that costs are high in deployment and maintenance when a PKI is deployed in the existing technical solution for preventing peer node cheating. The process for the identification unit to identify the malicious node by using the ID anti-forgery log is simple, effective, and the detection costs are low. The problem that message routing delay is long when signature verification is performed for each sent and received message in the existing technical solution for preventing peer node cheating is solved. When the identification unit identifies the malicious node by using the ID anti-forgery log, the authentication unit simply needs to verify the node ID, while signature verification is not necessarily performed for each sent and received message, and thus the routing delay is shortened.

The embodiment of the present invention further provides a client node, which includes an authentication unit, a storage unit, and an identification unit.

The authentication unit is configured to authenticate validity of an ID of a peer node.

The storage unit is configured to establish and store an ID anti-forgery log about the peer node according to an authentication result of the authentication unit.

The identification unit is configured to identify a malicious peer node according to information of the peer node sending a message and the ID anti-forgery log stored by the storage unit.

The ID anti-forgery log about the peer node includes the ID of the peer node, the physical address of the peer node, and the mapping relation(s) between the ID of the peer node and the physical address of the peer node.

The client node can identify a malicious peer node, and the specific process of malicious peer node identification has been described in detail in the method embodiment, and will not be described again here.

The client node provided in the embodiment of the present invention stores an ID anti-forgery log at a local storage, which solves the problem that costs are high in deployment and maintenance when a PKI is deployed in the existing technical solution for preventing peer node cheating. The process for the identification unit of the client node to identify the malicious node by using the ID anti-forgery log is simple, effective, and the detection costs are low. The problem that message routing delay is long when signature verification is performed for each sent and received message in the existing technical solution for preventing peer node cheating is solved. When the identification unit of the client node identifies the malicious peer node by using the ID anti-forgery log, the authentication unit of the client node simply needs to verify the ID of the peer node, while signature verification is not necessarily performed for each sent and received message, and thus the routing delay is shortened.

The embodiment of the present invention provides a network peer node, which includes an authentication unit, a storage unit, and an identification unit.

The authentication unit is configured to authenticate validity of an ID of a client node.

The storage unit is configured to establish and store an ID anti-forgery log about the client node according to an authentication result of the authentication unit.

The identification unit is configured to identify a malicious client node according to information of the client node sending a message and the ID anti-forgery log stored by the storage unit.

The ID anti-forgery log about the client node includes the ID of the client node, the physical address of the client node, and one or more mapping relation(s) between the ID of the client node and the physical address of the client node.

The peer node can identify the malicious client node, and the process of malicious client node identification has been described in detail in the method embodiment, and will not be described again here.

The network peer node provided in the embodiment of the present invention stores an ID anti-forgery log at a local storage, which solves the problem that costs are high in deployment and maintenance when a PKI is deployed in the existing technical solution for preventing peer node cheating. The process for the identification unit in the peer node to identify the malicious node by using the ID anti-forgery log is simple, effective, and the detection costs are low. The problem that message routing delay is long when signature verification is performed for each sent and received message in the existing technical solution for preventing peer node cheating is solved. When the identification unit of the peer node identifies the malicious client node by using the ID anti-forgery log, the authentication unit of the peer node simply needs to verify the client node ID, while signature verification is not necessarily performed for each sent and received message, and thus the routing delay is shortened.

The embodiment of the present invention provides a network convergent point, which includes an authentication unit, a storage unit, and an identification unit.

The authentication unit is configured to authenticate validity of an ID of a authenticated peer node.

The storage unit is configured to establish and store an ID anti-forgery log about the authenticated peer node according to an authentication result of the authentication unit.

The identification unit is configured to identify a malicious node according to information of a node sending a message and the ID anti-forgery log stored by the storage unit.

The ID anti-forgery log about the peer node includes the ID of the peer node, the physical address of the peer node, and one or more mapping relation(s) between the ID and the physical address.

The convergent point can identify a malicious node, the specific process of which has been described in detail in the method embodiment, and will not be described again here.

The network convergent point provided in the embodiment of the present invention stores an ID anti-forgery log at a local storage, which solves the problem that costs are high in deployment and maintenance when a PKI is deployed in the existing technical solution for preventing peer node cheating. The process for the identification unit of the convergent point to identify the malicious node by using the ID anti-forgery log is simple, effective, and the detection costs are low. The problem that message routing delay is long when signature verification is performed for each sent and received message in the existing technical solution for preventing peer node cheating is solved. When the identification unit of the convergent point identifies the malicious node by using the ID anti-forgery log, the authentication unit of the convergent point simply needs to verify the node ID, while signature verification is not necessarily performed for each sent and received message, and thus the routing delay is shortened.

The embodiment of the present invention further provides a system for preventing a node from forging ID in a P2P network. As shown in FIG. 4, the system includes a peer node and a client node.

The client node is configured to find the peer node serving the client node and establish a connection with the peer node.

The peer node is configured to establish the connection with the client node sending a service request to the peer node.

At least one of the client node and the peer node acts as an authentication initiator and authenticates an ID of the other party

After the authentication succeeds, the client node or the peer node acting an authentication initiator locally establishes and stores an ID anti-forgery log about the other party.

The ID anti-forgery log about the peer node includes the ID of the peer node, the physical address of the peer node, and one or more mapping relation(s) between the ID of the peer node and the physical address of the peer node. The ID anti-forgery log about the client node includes the ID of the client node, the physical address of the client node, and one or more mapping relation(s) between the ID of the client node and the physical address of the client node.

In some application scenarios, the system for preventing a node from forging ID in a P2P network provided in the embodiment of the present invention further includes a convergent point, which connects with at least one peer node, and the peer node connects with the client node.

The peer node is configured to find the convergent point serving the peer node and establish a connection with the convergent point.

The convergent point is configured to establish the connection with the peer node sending a service request to the convergent point.

The convergent point acts as an authentication initiator and authenticates an ID of the peer node.

After the authentication succeeds, the convergent point acting as the authentication initiator locally establishes and stores an ID anti-forgery log about the peer node.

A node is a client node or a peer node. If a node is a client node, the ID anti-forgery log of the node includes: the ID of the peer node, and the physical address of the peer node, and one or more mapping relation(s) between the ID of the peer node and the physical address of the client node. If a node is a peer node, the ID anti-forgery log of the node includes the ID of the client node, the physical address of the client node, and the mapping relation(s) between the ID of the client node and the physical address of the client node.

The system can identify a malicious node, the specific process of which has been described in detail in the method embodiment, and will not be described in detail here.

In the system for preventing a node from forging ID provided in the embodiment of the present invention, the peer node, the client node, or the convergent point stores an ID anti-forgery log at a local storage, which solves the problem that costs are high in deployment and maintenance when a PKI is deployed in the existing technical solution for preventing peer node cheating. The process for the peer node, the client node, or the convergent point to identify the malicious node by using the ID anti-forgery log is simple, effective, and the detection costs are low. The problem that message routing delay is long when signature verification is performed for each sent and received message in the existing technical solution for preventing peer node cheating is solved. When the peer node, the client node, or the convergent point identifies the malicious node by using the ID anti-forgery log, only the node ID needs to be verified, while signature verification is not necessarily performed for each sent and received message, and thus the routing delay is shortened.

Those skilled in the art may understand that all or part of the steps of the method according to the embodiments of the present invention may be implemented by a program instructing relevant hardware. The program may be stored in a computer readable storage medium, such as a Read-Only Memory (ROM), a Random Access Memory (RAM), a magnetic disk or a Compact Disk Read-Only Memory (CD-ROM).

The above descriptions are merely some exemplary embodiments of the present invention, but not intended to limit the scope of the present invention. Any modification, equivalent replacement, or improvement made without departing from the principle of the present invention should fall within the scope of the present invention. Therefore, the protection scope of the present invention is subject to the appended claims.

## Claims

1. A method for preventing a node from forging identity, ID, in a Peer to Peer, P2P, network, wherein the peer network comprises a peer node and a client node, wherein the method comprises:
after the client node finds the peer node serving the client node, acting, by at least one of the client node and the peer node, as an authentication initiator, and authenticating (11) an ID of the other party; and
after the authentication succeeds, locally establishing and storing (12), by the client node or the peer node acting as the authentication initiator, an ID anti-forgery log about the other party, and identifying a malicious node by using the ID anti-forgery log, wherein the node acting as an authentication initiator is the client node or the peer node,
if the node acting as an authentication initiator is the client node, the ID anti-forgery log about the other party comprises the ID of the peer node, a physical address of the peer node, and one ore more mapping relation(s) between the ID of the peer node and the physical address of the peer node
if the node acting as an authentication initiator is the peer node, the ID anti-forgery log about the other party comprises the ID of the client node, a physical address of the client node, and one or more mapping relation(s) between the ID of the client node and the physical address of the client node.

2. The method for preventing a node from forging ID in a P2P network according to claim 1, wherein
if the node acting as an authentication initiator is the client node, the method further comprises:
after receiving a message sent by the peer node, acting, by the client node, as the authentication initiator, and authenticating the mapping relation(s) between the ID of the peer node and the physical address of the peer node; and
if the mapping relation(s) between the ID of the peer node and the physical address of the peer node is consistent with a record in the ID anti-forgery log owned by the client node, regarding the peer node as not a malicious node; if the mapping relation(s) between the ID of the peer node and the physical address of the peer node is inconsistent with a record in the ID anti-forgery log owned by the client node, regarding the peer node as a malicious node;
if the node acting as an authentication initiator is the peer node, the method further comprises:
after receiving a message sent by the client node, acting, by the peer node, as the authentication initiator, and authenticating the mapping relation(s) between the will of the client node and the physical address of the client node; and
if the mapping relation(s) between the ID of the client node and the physical address of the client node is consistent with a record in the ID anti-forgery log owned by the peer node, regarding the client node as not a malicious node; if the mapping relation(s) between the ID of the client node and the physical address of the client node is inconsistent with a record in the ID anti-forgery log owned by the peer node, regarding the client node as a malicious node.

3. The method for preventing a node from forging ID in a P2P network according to claim 1 or 2, wherein the method further comprises:
if the node acting as an authentication initiator comprises the client node, and the physical address of the peer node changes, deleting, by the client node, an ID anti-forgery record about the peer node;
re-authenticating, by the client node, the peer node; and
after the authentication succeeds, storing the mapping relation(s) between the ID of the peer node and the new physical address of the peer node in the local ID anti-forgery log.

4. The method for preventing a node from forging ID in a P2P network according to claim 1, further comprising:
if the node acting as an authentication initiator comprises the peer node, and the peer node serving the client node leaves the P2P network, notifying, by the peer node, the mapping relation(s) between the ID of the client node and the physical address of the client node to a proxy peer node, and notifying the client node that the proxy peer node continues to provide a service to the client node;
authenticating, by the client node, an ID of the proxy peer node;
after the authentication succeeds, adding, by the client node, the mapping relation(s) between the ID of the proxy peer node and a physical address of the proxy peer node to the local ID anti-forgery log; and
accepting, by the client node, the service provided by the proxy peer node.

5. The method for preventing a node from forging ID in a P2P network according to claim 1, wherein the mapping relation(s) between the ID of the peer node and the physical address of the peer node is the mapping relation(s) between one peer node and at least two physical addresses of the peer node.

6. The method for preventing a node from forging ID in a P2P network according to claim 1, wherein the peer network further comprises a convergent point connected to at least one peer node, the method further comprising:
after the peer node finds the convergent point serving the peer node, authenticating, by the convergent point, an ID of the peer node; and
after the authentication succeeds, locally establishing and storing, by the convergent point, the ID anti-forgery log about the peer node.

7. The method for preventing a node from forging ID in a P2P network according to claim 6, wherein the node acting as an authentication initiator is the client node or the peer node,
if the node acting as an authentication initiator is the client node, the ID anti-forgery log about the other party comprises the ID of the peer node, the physical address of the peer node, and the mapping relation(s) between the ID of the peer node and the physical address of the peer node; and
if the node acting as an authentication initiator is the peer node,the ID anti-forgery log about the other party comprises the ID of the client node, the physical address of the client node, and the mapping relation(s) between the ID of the client node and the physical address of the client node.

8. The method for preventing a node from forging ID in a P2P network according to claim 6, wherein after the peer node finds the convergent point serving the peer node, authenticating, by the convergent point, the ID of the node comprises:
after receiving a message sent by the peer node, authenticating, by the convergent point, a message through deep packet inspection, DPI; and
extracting the ID of the peer node and the physical address of the peer node.

9. A device for preventing a node from forging identity, ID, in a Peer to Peer, P2P network, comprising an authentication unit (1), a storage unit (2), and an identification unit (3), wherein
the authentication unit (1) is configured to authenticate validity of an ID of the node;
the storage unit (2) is configured to establish and store an ID anti-forgery log about the authenticated node, and
the identification unit (3) is configured to identify a malicious node according to the ID anti-forgery log, wherein the device is a client node or a peer node or a network convergent point
if the device is the client node, the ID anti-forgery log about the authenticated node comprises the ID of the peer node, a physical address of the peer node, and one or more mapping relation(s) between the ID of the peer node and the physical address of the peer node; and
if the device is the peer node, the ID anti-forgery log about the authenticated node comprises the ID of the client node, a physical address of the client node and one or more mapping relation(s) between the ID of the client node and the physical address of the client node; and
if the device is the network convergent point, the ID anti-forgery log about the authenticated node comprises the ID of the peer node, a physical address of the peer node, and one or more mapping relation(s) between the ID of the peer node and the physical address of the peer node.

10. A system for preventing a node from forging identity, ID, in a Peer to Peer, P2P, network, comprising a peer node and a client node, wherein
the client node is configured to find the peer node serving the client node and establish a connection with the client node;
the peer node is configured to establish the connection with the client node sending a service request to the peer node;
at least one of the client node and the peer node acts as an authentication initiator and authenticates the other party; and
after the authentication succeeds, the client node or the peer node acting as the authentication initiator locally establishes and stores an ID anti-forgery log about the other party and identifies a malicious node by using the ID anti-forgery log, wherein
if the node acting as an authentication initiator is the client node, the ID anti-forgery log about the other party comprises an ID of the peer node, a physical address of the peer node and one or more mapping relation(s) between the ID of the peer node and the physical address of the peer node; and
if the node acting as an authentication initiator is the peer node, the ID anti-forgery log about the other party comprises an ID of the client, a physical address of the client node, and one or more mapping relation(s) between the ID of the client node and the physical address of the client node.

11. The system for preventing a node from forging ID in a P2P network according to claim 15, further comprising a convergent point connected in the P2P network, wherein the convergent point is connected to at least one peer node,
the peer node is configured to find the convergent point serving the peer node and establish a connection with the convergent point;
the convergent point is configured to establish the connection with the peer node sending a service request to the convergent node;
the convergent point acts as an authentication initiator and authenticates an ID of the peer node; and
after the authentication succeeds, the convergent point acting as the authentication initiator locally establishes and stores an ID anti-forgery log about the peer node.

## Patentansprüche

1. Verfahren zum Verhindern, dass ein Knoten die Identität, ID, in einem Peer-to-Peer- bzw. P2P-Netzwerk fälscht, wobei das Peer-Netzwerk einen Peer-Knoten und einen Client-Knoten umfasst, wobei das Verfahren Folgendes umfasst:
nachdem der Client-Knoten den Peer-Knoten, der den Client-Knoten versorgt, findet, handelt der Client-Knoten und/oder der Peer-Knoten als Authentifizierungsinitiator und eine ID des anderen Teilnehmers wird authentifiziert (11); und
nachdem die Authentifizierung erfolgreich war, wird ein ID-Antifälschungs-Log über den anderen Teilnehmer durch den Client-Knoten oder den Peer-Knoten, der als der Authentifizierungsinitiator handelt, lokal hergestellt und gespeichert (12) und ein böswilliger Knoten durch Verwendung des ID-Antifälschungs-Log identifiziert,
wobei der als ein Authentifizierungsinitiator handelnde Knoten der Client-Knoten oder der Peer-Knoten ist,
wenn der als Authentifizierungsinitiator handelnde Knoten der Client-Knoten ist, umfasst das ID-Antifälschungs-Log über den anderen Teilnehmer die ID des Peer-Knotens, eine physikalische Adresse des Peer-Knotens und eine oder mehrere Abbildungsbeziehung(en) zwischen der ID des Peer-Knotens und der physikalischen Adresse des Peer-Knotens;
wenn der als Authentifizierungsinitiator handelnde Knoten der Peer-Knoten ist, umfasst das ID-Antifälschungs-Log über den anderen Teilnehmer die ID des Client-Knotens, eine physikalische Adresse des Client-Knotens und eine oder mehrere Abbildungsbeziehung(en) zwischen der ID des Client-Knotens und der physikalischen Adresse des Client-Knotens.

2. Verfahren zum Verhindern, dass ein Knoten die ID in einem P2P-Netzwerk fälscht, nach Anspruch 1, wobei
wenn der als Authentifizierungsinitiator handelnde Knoten der Client-Knoten ist, das Verfahren ferner Folgendes umfasst:
nach dem Empfang einer durch den Peer-Knoten gesendeten Nachricht handelt der Client-Knoten als der Authentifizierungsinitiator, und die Abbildungsbeziehung(en) zwischen der ID des Peer-Knotens und der physikalischen Adresse des Peer-Knotens wird/werden authentifiziert; und
wenn die Abbildungsbeziehung(en) zwischen der ID des Peer-Knotens und der physikalischen Adresse des Peer-Knotens mit einer Aufzeichnung in dem ID-Antifälschungs-Log, das dem Client-Knoten gehört, vereinbar ist/sind, wird der Peer-Knoten als nicht böswilliger Knoten betrachtet; wenn die Abbildungsbeziehung(en) zwischen der ID des Peer-Knotens und der physikalischen Adresse des Peer-Knotens mit einer Aufzeichnung in dem ID-Antifälschungs-Log, das dem Client-Knoten gehört, nicht vereinbar ist/sind, wird der Peer-Knoten als ein böswilliger Knoten betrachtet;
wenn der als Authentifizierungsinitiator handelnde Knoten der Peer-Knoten ist, das Verfahren ferner Folgendes umfasst:
nach dem Empfang einer durch den Client-Knoten gesendeten Nachricht handelt der Peer-Knoten als der Authentifizierungsinitiator und die Abbildungsbeziehung(en) zwischen der ID des Client-Knotens und der physikalischen Adresse des Client-Knotens wird/werden authentifiziert; und
wenn die Abbildungsbeziehung(en) zwischen der ID des Client-Knotens und der physikalischen Adresse des Client-Knotens mit einer Aufzeichnung in dem ID-Antifälschungs-Log, das dem Peer-Knoten gehört, vereinbar ist/sind, wird der Client-Knoten als nicht böswilliger Knoten betrachtet; wenn die Abbildungsbeziehung(en) zwischen der ID des Client-Knotens und der physikalischen Adresse des Client-Knotens mit einer Aufzeichnung in dem ID-Antifälschungs-Log, das dem Peer-Knoten gehört, nicht vereinbar ist/sind, wird der Client-Knoten als ein böswilliger Knoten betrachtet.

3. Verfahren zum Verhindern, dass ein Knoten die ID in einem P2P-Netzwerk fälscht, nach Anspruch 1 oder 2, wobei das Verfahren ferner Folgendes umfasst:
wenn der als Authentifizierungsinitiator handelnde Knoten den Client-Knoten umfasst und sich die physikalische Adresse des Peer-Knotens ändert, löscht der Client-Knoten eine ID-Antifälschungsaufzeichnung über den Peer-Knoten;
der Client-Knoten authentifiziert den Peer-Knoten neu; und
nachdem die Authentifizierung erfolgreich war, wird/werden die Abbildungsbeziehung(en) zwischen der ID des Peer-Knotens und der neuen physikalischen Adresse des Peer-Knotens in dem lokalen ID-Antifälschungs-Log gespeichert.

4. Verfahren zum Verhindern, dass ein Knoten die ID in einem P2P-Netzwerk fälscht, nach Anspruch 1, ferner umfassend:
wenn der als Authentifizierungsinitiator handelnde Knoten den Peer-Knoten umfasst und der Peer-Knoten, der den Client-Knoten versorgt, das P2P-Netzwerk verlässt, meldet der Peer-Knoten die Abbildungsbeziehung(en) zwischen der ID des Client-Knotens und der physikalischen Adresse des Client-Knotens an einen Proxy-Peer-Knoten und dem Client-Knoten wird gemeldet, dass der Proxy-Peer-Knoten weiter einen Dienst für den Client-Knoten bereitstellt;
der Client-Knoten authentifiziert eine ID des Proxy-Peer-Knotens;
nachdem die Authentifizierung erfolgreich war, fügt der Client-Knoten die Abbildungsbeziehung(en) zwischen der ID des Proxy-Peer-Knotens und einer physikalischen Adresse des Proxy-Peer-Knotens zu dem lokalen ID-Antifälschungs-Log hinzu; und
der Client-Knoten nimmt den durch den Proxy-Peer-Knoten bereitgestellten Dienst an.

5. Verfahren zum Verhindern, dass ein Knoten die ID in einem P2P-Netzwerk fälscht, nach Anspruch 1, wobei die Abbildungsbeziehung(en) zwischen der ID des Peer-Knotens und der physikalischen Adresse des Peer-Knotens die Abbildungsbeziehung(en) zwischen dem Peer-Knoten und mindestens zwei physikalischen Adressen des Peer-Knotens ist/sind.

6. Verfahren zum Verhindern, dass ein Knoten die ID in einem P2P-Netzwerk fälscht, nach Anspruch 1, wobei das Peer-Netzwerk ferner einen Konvergenzpunkt umfasst, der mit mindestens einem Peer-Knoten verbunden ist, wobei das Verfahren ferner Folgendes umfasst:
nachdem der Peer-Knoten den Konvergenzpunkt, der den Peer-Knoten versorgt, findet, authentifiziert der Konvergenzpunkt eine ID des Peer-Knotens; und
nachdem die Authentifizierung erfolgreich war, wird das ID-Antifälschungs-Log über den Peer-Knoten durch den Konvergenzpunkt lokal hergestellt und gespeichert.

7. Verfahren zum Verhindern, dass ein Knoten die ID in einem P2P-Netzwerk fälscht, nach Anspruch 6, wobei der als Authentifizierungsinitiator handelnde Knoten der Client-Knoten oder der Peer-Knoten ist,
wenn der als Authentifizierungsinitiator handelnde Knoten der Client-Knoten ist, umfasst das ID-Antifälschungs-Log über den anderen Teilnehmer die ID des Peer-Knotens, die physikalische Adresse des Peer-Knotens und die Abbildungsbeziehung(en) zwischen der ID des Peer-Knotens und der physikalischen Adresse des Peer-Knotens; und
wenn der als Authentifizierungsinitiator handelnde Knoten der Peer-Knoten ist, umfasst das ID-Antifälschungs-Log über den anderen Teilnehmer die ID des Client-Knotens, die physikalische Adresse des Client-Knotens und die Abbildungsbeziehung(en) zwischen der ID des Client-Knotens und der physikalischen Adresse des Client-Knotens.

8. Verfahren zum Verhindern, dass ein Knoten die ID in einem P2P-Netzwerk fälscht, nach Anspruch 6, wobei das Authentifizieren der ID des Knotens durch den konvergenten Punkt, nachdem der Peer-Knoten den konvergenten Punkt findet, der den Peer-Knoten versorgt, Folgendes umfasst:
nach dem Empfang einer durch den Peer-Knoten gesendeten Nachricht authentifiziert der Konvergenzpunkt eine Nachricht durch Deep Packet Inspection, DPI; und
die ID des Peer-Knotens und die physikalische Adresse des Peer-Knotens werden extrahiert.

9. Einrichtung zum Verhindern, dass ein Knoten die Identität, ID, in einem Peer-to-Peer- bzw. P2P-Netzwerk fälscht, die eine Authentifizierungseinheit (1), eine Speichereinheit (2) und eine Identifikationseinheit (3) umfasst, wobei die Authentifizierungseinheit (1) dafür ausgelegt ist, die Gültigkeit einer ID des Knotens zu authentifizieren;
die Speichereinheit (2) dafür ausgelegt ist, ein ID-Antifälschungs-Log über den authentifizierten Knoten herzustellen und zu speichern, und
die Identifikationseinheit (3) dafür ausgelegt ist, einen böswilligen Knoten gemäß dem ID-Antifälschungs-Log zu identifizieren, wobei die Einrichtung ein Client-Knoten oder ein Peer-Knoten oder ein Netzwerk-Konvergenzpunkt ist,
wenn die Einrichtung der Client-Knoten ist, umfasst das ID-Antifälschungs-Log über den authentifizierten Knoten die ID des Peer-Knotens, eine physikalische Adresse des Peer-Knotens und eine oder mehrere Abbildungsbeziehung(en) zwischen der ID des Peer-Knotens und der physikalischen Adresse des Peer-Knotens; und
wenn die Einrichtung der Peer-Knoten ist, umfasst das ID-Antifälschungs-Log über den authentifizierten Knoten die ID des Client-Knotens, eine physikalische Adresse des Client-Knotens und eine oder mehrere Abbildungsbeziehung(en) zwischen der ID des Client-Knotens und der physikalischen Adresse des Client-Knotens; und
wenn die Einrichtung der Netzwerk-Konvergenzpunkt ist, umfasst das ID-Antifälschungs-Log über den authentifizierten Knoten die ID des Peer-Knotens, eine physikalische Adresse des Peer-Knotens und eine oder mehrere Abbildungsbeziehung(en) zwischen der ID des Peer-Knotens und der physikalischen Adresse des Peer-Knotens.

10. System zum Verhindern, dass ein Knoten die Identität, ID, in einem Peer-to-Peer- bzw. P2P-Netzwerk fälscht, das einen Peer-Knoten und einen Client-Knoten umfasst, wobei
der Client-Knoten dafür ausgelegt ist, den Peer-Knoten, der den Client-Knoten versorgt, zu finden und eine Verbindung mit dem Client-Knoten herzustellen;
der Peer-Knoten dafür ausgelegt ist, die Verbindung mit dem Client-Knoten herzustellen, der eine Dienstanforderung zu dem Peer-Knoten sendet;
der Client-Knoten und/oder der Peer-Knoten als Authentifizierungsinitiator handelt und den anderen Teilnehmer authentifiziert; und
nachdem die Authentifizierung erfolgreich war, der Client-Knoten oder der Peer-Knoten, der als der Authentifizierungsinitiator handelt, ein ID-Antifälschungs-Log über den anderen Teilnehmer lokal herstellt und speichert und einen böswilligen Knoten durch Verwendung des ID-Antifälschungs-Log identifiziert, wobei wenn der als Authentifizierungsinitiator handelnde Knoten der Client-Knoten ist, das ID-Antifälschungs-Log über den anderen Teilnehmer eine ID des Peer-Knotens, eine physikalische Adresse des Peer-Knotens und eine oder mehrere Abbildungsbeziehung(en) zwischen der ID des Peer-Knotens und der physikalischen Adresse des Peer-Knotens umfasst; und
wenn der als Authentifizierungsinitiator handelnde Knoten der Peer-Knoten ist, das ID-Antifälschungs-Log über den anderen Teilnehmer eine ID des Client-Knotens, eine physikalische Adresse des Client-Knotens und eine oder mehrere Abbildungsbeziehung(en) zwischen der ID des Client-Knotens und der physikalischen Adresse des Client-Knotens umfasst.

11. System zum Verhindern, dass ein Knoten die ID in einem P2P-Netzwerk fälscht, nach Anspruch 15, das ferner einen in dem P2P-Netzwerk verbundenen Konvergenzpunkt umfasst, wobei der Konvergenzpunkt mit mindestens einem Peer-Knoten verbunden ist,
der Peer-Knoten dafür ausgelegt ist, den Konvergenzpunkt, der den Peer-Knoten versorgt, zu finden und eine Verbindung mit dem Konvergenzpunkt herzustellen; der Konvergenzpunkt dafür ausgelegt ist, die Verbindung mit dem Peer-Knoten herzustellen, der eine Dienstanforderung zu dem Konvergenzknoten sendet;
der Konvergenzpunkt als Authentifizierungsinitiator handelt und eine ID des Peer-Knotens authentifiziert; und
nachdem die Authentifizierung erfolgreich war, der als der Authentifizierungsinitiator handelnde Konvergenzpunkt ein ID-Antifälschungs-Log über den Peer-Knoten lokal herstellt und speichert.

## Revendications

1. Procédé destiné à empêcher un noeud d'usurper une identité, ID, dans un réseau d'homologues, P2P, lequel réseau d'homologues comprend un noeud homologue et un noeud client, le procédé comprenant les étapes consistant à :
dès que le noeud client trouve le noeud homologue desservant le noeud client, agir, par le noeud client et/ou le noeud homologue, en qualité de demandeur d'authentification, et authentifier (11) une ID de l'autre correspondant ; et
en cas de succès de l'authentification, établir et mémoriser localement (12), par le noeud client ou le noeud homologue agissant en qualité de demandeur d'authentification, un journal d'anti-usurpation d'ID relatif à l'autre correspondant, et identifier un noeud malveillant à partir du journal d'anti-usurpation d'ID, le noeud agissant en qualité de demandeur d'authentification étant le noeud client ou le noeud homologue,
si le noeud agissant en qualité de demandeur d'authentification est le noeud client, le journal d'anti-usurpation d'ID relatif à l'autre correspondant comprend l'ID du noeud homologue, une adresse physique du noeud homologue et une ou plusieurs relation(s) de correspondance entre l'ID du noeud homologue et l'adresse physique du noeud homologue ;
si le noeud agissant en qualité de demandeur d'authentification est le noeud homologue, le journal d'anti-usurpation d'ID relatif à l'autre correspondant comprend l'ID du noeud client, une adresse physique du noeud client et une ou plusieurs relation(s) de correspondance entre l'ID du noeud client et l'adresse physique du noeud client.

2. Procédé destiné à empêcher un noeud d'usurper une ID dans un réseau P2P selon la revendication 1,
si le noeud agissant en qualité de demandeur d'authentification est le noeud client, le procédé comprend en outre les étapes consistant à :
dès réception d'un message envoyé par le noeud homologue, agir, par le noeud client, en qualité de demandeur d'authentification, et authentifier la ou les relation(s) de correspondance entre l'ID du noeud homologue et l'adresse physique du noeud homologue ; et
si la (les) relation(s) de correspondance entre l'ID du noeud homologue et l'adresse physique du noeud homologue est (sont) compatible(s) avec un enregistrement dans le journal d'anti-usurpation d'ID appartenant au noeud client, considérer que le noeud homologue n'est pas un noeud malveillant ; si la (les) relation(s) de correspondance entre l'ID du noeud homologue et l'adresse physique du noeud homologue est (sont) incompatible(s) avec un enregistrement dans le journal d'anti-usurpation d'ID appartenant au noeud client, considérer que le noeud homologue est un noeud malveillant ;
si le noeud agissant en qualité de demandeur d'authentification est le noeud homologue, le procédé comprend en outre les étapes consistant à :
dès réception d'un message envoyé par le noeud client, agir, par le noeud homologue, en qualité de demandeur d'authentification, et authentifier la (les) relation(s) de correspondance entre l'ID du noeud client et l'adresse physique du noeud client ; et
si la (les) relation(s) de correspondance entre l'ID du noeud client et l'adresse physique du noeud client est (sont) compatible(s) avec un enregistrement dans le journal d'anti-usurpation d'ID appartenant au noeud homologue, considérer que le noeud client n'est pas un noeud malveillant ; si la (les) relation(s) de correspondance entre l'ID du noeud client et l'adresse physique du noeud client est (sont) incompatible(s) avec un enregistrement dans le journal d'anti-usurpation d'ID appartenant au noeud homologue, considérer que le noeud client est un noeud malveillant.

3. Procédé destiné à empêcher un noeud d'usurper une ID dans un réseau P2P selon la revendication 1 ou 2, le procédé comprenant en outre les étapes consistant à :
si le noeud agissant en qualité de demandeur d'authentification comprend le noeud client, et l'adresse physique du noeud homologue change, supprimer, par le noeud client, un enregistrement d'anti-usurpation d'ID relatif au noeud homologue;
authentifier à nouveau, par le noeud client, le noeud homologue ; et
en cas de succès de l'authentification, mémoriser la (les) relations(s) de correspondance entre l'ID du noeud homologue et la nouvelle adresse physique du noeud homologue dans le journal d'anti-usurpation d'ID local.

4. Procédé destiné à empêcher un noeud d'usurper une ID dans un réseau P2P selon la revendication 1, comprenant en outre les étapes consistant à :
si le noeud agissant en qualité de demandeur d'authentification comprend le noeud homologue, et le noeud homologue desservant le noeud client quitte le réseau P2P, notifier, par le noeud homologue, à un noeud homologue mandataire la (les) relation(s) de correspondance entre l'ID du noeud client et l'adresse physique du noeud client, et notifier au noeud client que le noeud homologue mandataire continue de fournir un service au noeud client ;
authentifier, par le noeud client, une ID du noeud homologue mandataire ;
en cas de succès de l'authentification, ajouter, par le noeud client, la (les) relation(s) de correspondance entre l'ID du noeud homologue mandataire et une adresse physique du noeud homologue mandataire au journal d'anti-usurpation d'ID local ; et
accepter, par le noeud client, le service fourni par le noeud homologue mandataire.

5. Procédé destiné à empêcher un noeud d'usurper une ID dans un réseau P2P selon la revendication 1, la (les) relation(s) de correspondance entre l'ID du noeud homologue et l'adresse physique du noeud homologue constituant la (les) relation(s) de correspondance entre un noeud homologue et au moins deux adresses physiques du noeud homologue.

6. Procédé destiné à empêcher un noeud d'usurper une ID dans un réseau P2P selon la revendication 1, le réseau d'homologues comprenant en outre un point de convergence connecté à au moins un noeud homologue, le procédé comprenant en outre les étapes consistant à :
dès que le noeud homologue trouve le point de convergence desservant le noeud homologue, authentifier, par le point de convergence, une ID du noeud homologue ; et
en cas de succès de l'authentification, établir et mémoriser localement, par le point de convergence, le journal d'anti-usurpation d'ID relatif au noeud homologue.

7. Procédé destiné à empêcher un noeud d'usurper une ID dans un réseau P2P selon la revendication 6, le noeud agissant en qualité de demandeur d'authentification étant le noeud client ou le noeud homologue,
si le noeud agissant en qualité de demandeur d'authentification est le noeud client, le journal d'anti-usurpation d'ID relatif à l'autre correspondant comprend l'ID du noeud homologue, l'adresse physique du noeud homologue et la (les) relations(s) de correspondance entre l'ID du noeud homologue et l'adresse physique du noeud homologue ; et
si le noeud agissant en qualité de demandeur d'authentification est le noeud homologue, le journal d'anti-usurpation d'ID relatif à l'autre correspondant comprend l'ID du noeud client, l'adresse physique du noeud client et la (les) relations(s) de correspondance entre l'ID du noeud client et l'adresse physique du noeud client.

8. Procédé destiné à empêcher un noeud d'usurper une ID dans un réseau P2P selon la revendication 6, l'étape consistant à, dès que le noeud homologue trouve le point de convergence desservant le noeud homologue, authentifier, par le point de convergence, l'ID du noeud comprenant les étapes consistant à :
dès réception d'un message envoyé par le noeud homologue, authentifier, par le point de convergence, un message au moyen d'une inspection de paquets en profondeur, DPI ; et
extraire l'ID du noeud homologue et l'adresse physique du noeud homologue.

9. Dispositif destiné à empêcher un noeud d'usurper une identité, ID, dans un réseau d'homologues, P2P, le dispositif comprenant une unité d'authentification (1), une unité de mémorisation (2) et une unité d'identification (3),
l'unité d'authentification (1) étant conçue pour authentifier la validité d'une ID du noeud ;
l'unité de mémorisation (2) étant conçue pour établir et mémoriser un journal d'anti-usurpation d'ID relatif au noeud authentifié, et
l'unité d'identification (3) étant conçue pour identifier un noeud malveillant à partir du journal d'anti-usurpation d'ID, le dispositif étant un noeud client ou un noeud homologue ou un point de convergence du réseau,
si le dispositif est le noeud client, le journal d'anti-usurpation d'ID relatif au noeud authentifié comprend l'ID du noeud homologue, une adresse physique du noeud homologue et une (des) relation(s) de correspondance entre l'ID du noeud homologue et l'adresse physique du noeud homologue ; et
si le dispositif est le noeud homologue, le journal d'anti-usurpation d'ID relatif au noeud authentifié comprend l'ID du noeud client, une adresse physique du noeud client et une (des) relation(s) de correspondance entre l'ID du noeud client et l'adresse physique du noeud client ; et
si le dispositif est le point de convergence du réseau, le journal d'anti-usurpation d'ID relatif au noeud authentifié comprend l'ID du noeud homologue, une adresse physique du noeud homologue et une (des) relation(s) de correspondance entre l'ID du noeud homologue et l'adresse physique du noeud homologue.

10. Système destiné à empêcher un noeud d'usurper une identité, ID, dans un réseau d'homologues, P2P, comprenant un noeud homologue et un noeud client,
le noeud client étant conçu pour trouver le noeud homologue desservant le noeud client et établir une connexion avec le noeud client ;
le noeud homologue étant conçu pour établir la connexion avec le noeud client envoyant une demande de service au noeud homologue ;
le noeud client et/ou le noeud homologue agissant en qualité de demandeur d'authentification et authentifiant l'autre correspondant ; et
en cas de succès de l'authentification, le noeud client ou le noeud homologue agissant en qualité de demandeur d'authentification établissant et mémorisant localement un journal d'anti-usurpation d'ID relatif à l'autre correspondant et identifiant un noeud malveillant à partir du journal d'anti-usurpation d'ID,
si le noeud agissant en qualité de demandeur d'authentification est le noeud client, le journal d'anti-usurpation d'ID relatif à l'autre correspondant comprend une ID du noeud homologue, une adresse physique du noeud homologue et une (des) relation(s) de correspondance entre l'ID du noeud homologue et l'adresse physique du noeud homologue ; et
si le noeud agissant en qualité de demandeur d'authentification est le noeud homologue, le journal d'anti-usurpation d'ID relatif à l'autre correspondant comprend une ID du noeud client, une adresse physique du noeud client et une (des) relation(s) de correspondance entre l'ID du noeud client et l'adresse physique du noeud client.

11. Système destiné à empêcher un noeud d'usurper une ID dans un réseau P2P selon la revendication 15, comprenant en outre un point de convergence connecté dans le réseau P2P, le point de convergence étant connecté à au moins un noeud homologue, le noeud homologue étant conçu pour trouver le point de convergence desservant le noeud homologue et établir une connexion avec le point de convergence ;
le point de convergence étant conçu pour établir la connexion avec le noeud homologue envoyant une demande de service au noeud de convergence ;
le point de convergence agissant en qualité de demandeur d'authentification et authentifiant une ID du noeud homologue ; et
en cas de succès de l'authentification, le point de convergence agissant en qualité de demandeur d'authentification établissant et mémorisant localement un journal d'anti-usurpation d'ID relatif au noeud homologue.
